# EUROPEAN PATENT SPECIFICATION

(11) **EP 3 176 080 B1**
(45) Date of publication and mention of the grant of the patent: **16.10.2019**
(21) Application number: 15306920.8
(22) Date of filing: 03.12.2015
(51) Int. Cl.: B64C 13/04, B64C 27/56, G09B 9/02

(54) **GEAR REDUCER FOR A COCKPIT CONTROL DEVICE OF AN AIRCRAFT, AND CONTROL DEVICE COMPRISING SUCH A GEAR REDUCER**
UNTERSETZUNGSGETRIEBE FÜR EINE COCKPITSTEUERUNGSVORRICHTUNG EINES FLUGZEUGS UND STEUERUNGSVORRICHTUNG MIT SOLCH EINEM UNTERSETZUNGSGETRIEBE
RÉDUCTEUR À ENGRENAGES POUR DISPOSITIF DE COMMANDE DE COCKPIT D'UN AVION, UN TEL DISPOSITIF COMPRENANT LEDIT ENGRENAGE

(43) Date of publication of application: 07.06.2017
(73) Proprietor: LORD Solutions France, 26600 Pont-de-l'Isère (FR)
(72) Inventor: ROUSSEY, Bastien, 26600 TAIN L'HERMITAGE (FR)
(74) Representative: Delorme, Nicolas

(56) References cited:
- FR-A1- 2 991 288
- GB-A- 199 399
- US-A- 3 243 148
- US-A1- 2012 025 031

## Description

The present invention concerns a gear reducer for a cockpit control device of an aircraft, and a control device comprising such a gear reducer.

Fly-by-wire type controls for aircrafts often include a control stick, which is not mechanically linked to the flight control surfaces of the aircraft: this link is achieved with an electronic control system including, among others, a calculator. The calculator controls the flight control surfaces of the aircraft by means of actuators, in response of signals provided by sensors detecting the position of the control stick moved by the pilot.

The control stick is generally mounted on a gear reducer with specific features. For an accurate piloting, with a smooth and precise operation of the control stick, it is required that the gear reducer has the lowest backlash possible and the lowest friction possible.

Some control devices of the prior art are provided an anti-backlash reducer, including a pinion engaged by a main gearwheel, fixed on a shaft, and by an anti-backlash gearwheel rotatable on said shaft. The anti-backlash gearwheel is submitted to an elastic torque that presses the teeth of the anti-backlash gearwheel against the teeth of the pinion, and thus reduces plays and backlash in the reducer.

However, when the torque exerted on the anti-backlash reducer exceeds a predetermined level, the elastic torque of the anti-backlash gearwheel is too weak to achieve the anti-backlash reduction. In this case, the anti-backlash reducer operates as a conventional reducer, in other words with backlash.

If the elastic torque is increased, the efficiency of the reducer is drastically altered, since the friction between the anti-backlash gearwheel and the pinion is raised. Since the reducer is highly tensioned, wave-like variations of the friction value can occur in the gearwheel.

FR-A1-2 991 288 discloses a device for angular limitation of the rotation of a lever, including a pair of adjustable motorized abutment means, in the form of a pair of cams driven in rotation by a motor. The device further includes a fork, linked to the lever in rotation. The fork comprises two arms each provided with a roller, for alternative abutment of each of said rollers against one of the abutment means. In a particular mode of operation, this known device may function similarly to mono-directional gear reducer, as the motor may rotate the lever in rotation through one of the cams pushing one of the rollers. However, the transmission is lost if the torque is inverted, so that this known device may not actually be used as a gear reducer.

Therefore, it is hard to achieve a reducer with both low backlash and low friction.

The aim of the present invention is to propose an improved gear reducer for a cockpit control device of an aircraft in which the backlash is null while the friction is especially low.

To that end, the invention relates to a gear reducer according to claim 1.
In the gear reducer of the invention, the torque of the fork is transmitted to the cam, and vice-versa, through rolling contacts of the rollers. Thus, the reducer may be designed with no play and no backlash at all. In addition, the rolling contacts generate a low friction compared to loaded gearwheels, so that the mechanical efficiency of the reducer is very high despite the absence of play and backlash. Lastly, the gear reducer of the invention is of relatively simple design.

Other advantageous features of the invention considered alone or in combination are specified in claims 2 to 10.

The invention also relates to a cockpit control device according to claim 11.

The invention will be better understood upon reading the following description, provided solely as a non-limiting example and done in reference to the appended drawings, in which:
- Figure 1 is a perspective view of a gear reducer according to an embodiment of the invention;
- Figure 2 is an exploded view of the gear reducer of figure 1; and
- Figures 3, 4 and 5 are schematic front views of the gear reducers of figures 1 and 2, depicted in three different positions.

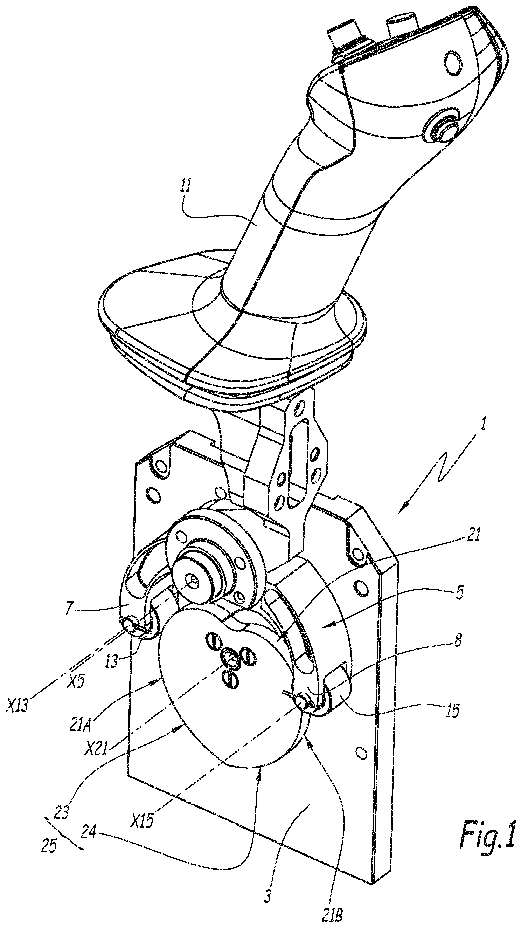

The gear reducer 1 depicted on figures 1 to 5 is meant to be integrated to a cockpit control device for an aircraft, not illustrated. The gear reducer 1 comprises a frame 3 which is meant to be fixed within a dashboard, or the like, of the cockpit.

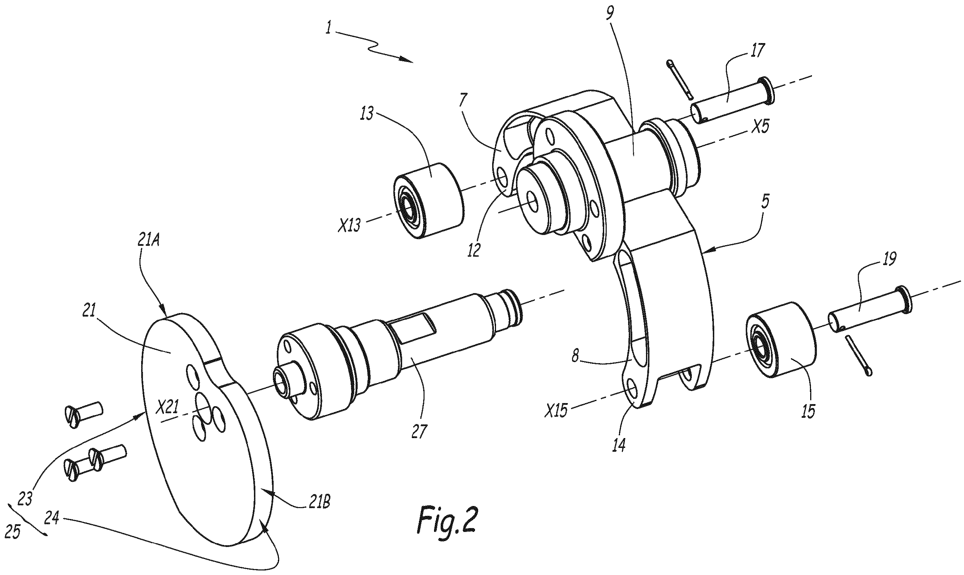

As visible on figures 1 and 2, the gear reducer 1 further comprises a fork 5, which is mounted on the frame 3, so as to be movable in rotation relative to said frame 3 around a fork axis X5. The gear reducer 1 is provided with a shaft 9, visible on figure 2, coaxial with the fork axis X5, and by means of which said fork 5 is mounted on the frame 3. The fork 5 and the shaft 9 constitute an input and/or an output of the gear reducer 1. The frame 3 preferably comprises rolling bearings through which the shaft 9 of the fork is mounted on the frame 3.The cockpit control device preferably includes a control stick 11 fixed to the fork 5, namely to the shaft 9, in rotation around the axis X5 relative to the frame 3. The pilot of the aircraft can rotate the fork 5 around the axis X5 relative to the frame 3 by means of the control stick 11.

The fork 5 is provided with two curved arms 7 and 8 extending radially from the fork axis X5 and together forming a C-shape extending in a plane perpendicular to the fork axis X5. The arms 7 and 8 are connected together at the axis X5 and extend in directions opposite to the control stick 11 and have a symmetrical shape relative to a central plane containing the axis X5.

As visible on figures 1 and 2, the gear reducer 1 further comprises a first roller 13, mounted at an end 12 of the arm 7 opposite to the axis X5, and a second roller 15, mounted at an end 14 of the arm 8 opposite to the axis X5. Each roller 13 and 15 is movable in rotation relative to the arm 7 and 8, respectively, around a roller axis X13 and a roller axis X15, respectively. The two roller axis X13 and X15 are parallel to the fork axis X5. Preferably, the axis X13 and X15 are equidistant to the axis X5. The rollers 13 and 15 are provided with pins 17 and 19, respectively, mounted at the ends 12 and 14 of the arms 7 and 8, coaxial with the axis X13 and X15 respectively. The rollers 13 and 15 are each provided with rolling bearings, for example needle bearings, by means of which said rollers 13 and 15 are mounted on the pins 17 and 19.

The gear reducer 1 further comprises a cam 21, movable in rotation relative to the frame 3 around a cam axis X21. The cam axis X21 is parallel to the fork axis X5. The cam 21 is fixed to a shaft 27, visible on figure 2, coaxial with the axis X21, and by means of which said cam 21 is mounted on the frame 3, preferably by means of rolling bearings. The cam 21 and/or the shaft 27 constitute another input or output of the gear reducer 1. The shaft 27 is linked in rotation around axis 21 to subsequent control systems such as a damping and/or torque feedback systems, of the cockpit control device. The cockpit control device comprises a sensor, for detecting the angular position of the shaft 27 around axis X21 relative to the frame 3, and a calculator, for controlling flight surfaces by means of actuators of the aircraft based on the angular position of the shaft 27 provided by the sensor. The sensor and the calculator are not illustrated.

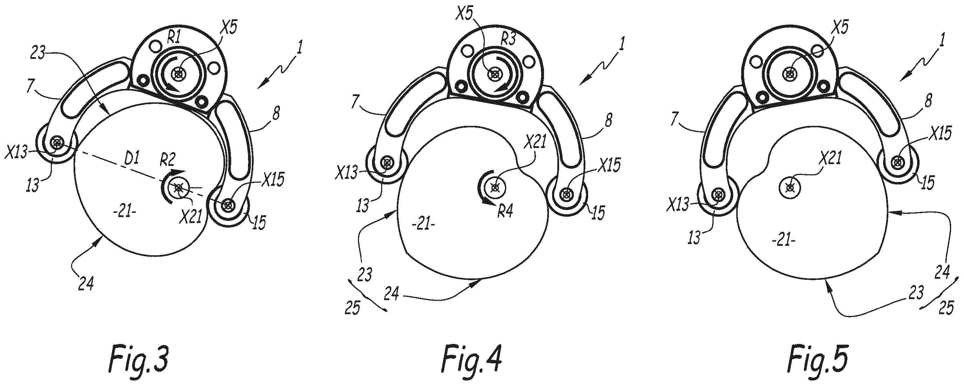

The cam 21 is provided with a bearing surface 25 extending parallel to the cam axis X21, and divided in a first half 23 and a second half 24 surrounding the cam axis X21. The rollers 13 and 15 are in rolling contact respectively with sides 21A and 21B of said cam 21 that are opposed to each other with respect to the axis X21, so that the cam 21 is located between arms 7 and 8. More precisely, the roller 13 is in rolling contact on the first side 21A with the first half 23 of the bearing surface 25 and the roller 15 is in rolling contact on the second side 21B with the second half 24 of the bearing surface 25. The arms 7 and 8 are curved for surrounding the cam 21 at a distance and allow a freedom of rotation of the fork 5 over an angular sector of approximately 21 degrees around axis X5 relative to the frame 3. When the fork 5 is mounted within the reducer 1 with the rollers 13 and 15 in rolling contact with the cam 21, the axis X13 and X15 are distant from each other at a distance D1, as illustrated on figure 3.

The torque and the rotation of the fork 5 are transmitted to the cam 21 through the rolling contact between the rollers 13 and 15 and the bearing surface 23 and 24.

The gear reducer 1 is reversible and can be operated in both rotational directions, since it includes the two rollers 13 and 15. As illustrated on figure 3, the rolling contact between the roller 13 and the first half 23 of the bearing surface 25 is meant for transmitting any torque applied on the fork 5 by the pilot in a first rotational direction R1 around the axis X5, and any torque applied on the cam 12 by subsequent control systems in a second rotational direction R2 around the axis X21 opposite to the first rotational direction. As illustrated on figure 4, the rolling contact between the roller 15 and the second half 24 of the bearing surface 25 is meant for transmitting any torque applied on the fork 5 by the pilot in a third rotational direction R3 around the axis X5 opposite to the first rotational direction R1, and any torque applied on the cam 12 by the subsequent control systems in a fourth rotational direction R4 around the axis X21 opposite to the third rotational direction R3.

Since all, or at least the majority of, the mechanical elements of the reducer 1 are in rolling contacts with each other, without being in sliding contact with each other, the reducer 1 is devoid of backlash, and the angular position of the fork 5 is fully linked to the angular position of the cam 21, without backlash. Thanks to the rolling contacts, the friction between these elements is very low and constant, and the mechanical efficiency of the reducer 1 is especially high. For the control device to be as much comfortable to handle by the pilot as possible:
- the geometry of the surface 25 of the cam 21 is designed so that the transmission of the reducer 1 is as linear as possible, namely that the reduction ratio is as constant as possible, and
- the surface 25 is as smooth as possible, smoothness of the having a greater impact than the linearity of the transmission for the sensation felt by the pilot in handling the control device.

Therefore, the surface 25 is preferably polished.

The rotational movement of the fork 5 is transmitted to the cam 21, and vice-versa, with a reduction ratio which depends on:
- the shape of the bearing surface 25 of the cam 21,
- the distance between the axis X5 and X21,
- the distance between the axis X5 and X13,
- the distance between the axis X5 and X15,
- the distance D1 defined between the axis X13 and X15, and
- the radius of the rollers 13 and 15.

The parameters hereinabove are linked by one or more analytic equation(s). Based on these equations, the shape of the bearing surface 25 is preferably designed, for example by calculation, so that the reduction ratio of the gear reducer is constant, on at least the majority of the rolling path of the rollers 13 and 15 on the cam 21. Alternatively, the bearing surface 25 can be designed so that the reduction ratio is not constant, and follows a chosen evolution, for specific applications. Thanks to the same analytic equations, the shape of the bearing surface 25 is preferably designed, so that the distance D1 between the two roller axis X13 and X15 is kept constant regardless the angular position of the cam 21, in the sector of rotation defined by the angular position of the fork 5. As illustrated on figures 3 to 5, for example, the bearing surface 25 is shaped as two symmetrical cardioid curves 23 and 24, each defined by an equation linking the abovementioned parameters. Any other suitable shape can be provided to the bearing surface 25, depending on the specific requirements of the application of the invention. Preferably, instead of analytic equation(s), the design of the bearing surface 25 is obtained by digital calculation, including discretization of the movement and tracking of the roller contact point on a rotating cam reference plan.

The fork 5 is elastically deformed by the cam 21, so that the arms 7 and 8 are forced apart from each other. In other words, the fork 5, and preferably the arms 7 and 8, is mounted in a preloaded way, so that convergent forces are applied on the cam 21 through the rollers 13 and 15, by elasticity of the fork 5. Thus, the cam 21 is squeezed between the two rollers 13 and 15, and any backlash is avoided regardless of the torques applied on the fork 5 and the cam 21. The stiffness value of the fork 5, between the two roller axis X13 and X15, is comprised between approximately 2000 N.mm⁻¹ and 4000 N.mm⁻¹ (Newton per millimeter). The fork 5 is elastically deformed by the cam 21 so that the distance between the roller axis X13 and X15 is increased of a value comprised between approximately 0.1 and 0.3 mm (millimeters), for example approximately 0,2 mm, relative to the original distance between the roller axis X13 and X15, when the fork 5 is not deformed. In other words, the distance D1 imposed by the cam 21 between the axis X13 and X15 is superior of approximately 0.2 mm to the distance measured between the same axis X13 and X15 when the fork 5 is not loaded.

Preferably, the fork 5 and the cam 21 are made of a metallic material such as titanium or aluminum. Alternatively, the fork 5 can be made of any other suitable material for providing the required stiffness and elasticity to the arms 7 and 8. The cam 21 can also be made of any other suitable material, optionally different from the material of the fork 5.

Technical features of the different embodiments can be, in whole or part, combined with each other. Thus, mechanical systems can be adapted to the specific requirements of the application.

## Claims

1. Gear reducer (1) for a cockpit control device of an aircraft,
the gear reducer comprising:
- a frame (3),
- a fork (5), movable in rotation relative to the frame (3) around a fork axis (X5), the fork comprising two arms (7, 8) extending radially from the fork axis (X5), connected together at the fork axis (X5),
- two rollers (13, 15), the rollers being respectively mounted at an end (12, 14) of the arms, each roller being movable in rotation relative to the corresponding arm around a roller axis (X13, X15) parallel to the fork axis, and
- a cam (21), movable in rotation relative to the frame around a cam axis (X21) parallel to the fork axis, the rollers being in rolling contact respectively with opposed sides (21A, 21B) of the cam, one among the fork and the cam being an input of the gear reducer, the other being an output of the gear reducer,
**characterized in that** the arms (7, 8) are elastically deformed by the cam (21) so that the arms apply convergent forces on the cam through the rollers (13, 15) for squeezing the cam between the two rollers.

2. Gear reducer (1) according to claim 1, **characterized in that** all the mechanical elements of the gear reducer (1) are in rolling contacts with each other, without being in sliding contact with each other.

3. Gear reducer (1) according to any one of the previous claims, **characterized in that** the two arms (7, 8) are curved and together form a C-shape extending in a plane perpendicular to the fork axis (X5).

4. Gear reducer (1) according to any one of the previous claims, **characterized in that**:
the fork (5) has a stiffness value, between the two roller axis (X13, X15), comprised between approximately 2000N.mm⁻¹ and 4000N.mm⁻¹.

5. Gear reducer (1) according to any one of the previous claims, **characterized in that** the cam (21) is provided with a bearing surface (25) that extends on the opposed sides (21A, 21B) of the cam and on which the rollers are in rolling contact.

6. Gear reducer (1) according to claim 5, **characterized in that** the two arms have a symmetrical shape relative to a central plane containing the fork axis (X5).

7. Gear reducer (1) according to claim 6, **characterized in that**:
- the rotational movement of the fork (5) is transmitted to the cam (21), and vice-versa, with a reduction ratio;
- the bearing surface (25) extends parallel to the cam axis (X21) and is divided in a first half (23) shaped as a first cardoid curve, and a second half (24) shaped as a second cardioid curve symmetrical to the first cardioid curve, the first half and the second half surrounding the cam axis (X21);
- the first roller (13) is in rolling contact on the first side (21A) of the cam (21) with the first half (23) of the bearing surface (25);
- the second roller (15) is in rolling contact on the second side (21B) with the second half (24) of the bearing surface (25); and
- each of the cardioid curves is defined by an equation linking the following parameters, on which the reduction ratio depends:
∘ the shape of the bearing surface (25) of the cam (21),
∘ the distance between the fork axis (X5) and the cam axis (X21),
∘ the distance between the fork axis (X5) and the roller axis (X13) of the first roller (13),
∘ the distance between the fork axis (X5) and the roller axis (X15) of the second roller (15),
∘ a distance (D1) defined between the roller axis (X13) and (X15), and
∘ the radius of the rollers (13, 15).

8. Gear reducer (1) according to any one of the previous claims, **characterized in that** the gear reducer comprises rolling bearings by means of which the rollers (13, 15) are mounted on the arms (7, 8).

9. Gear reducer (1) according to any one of the previous claims, **characterized in that** the gear reducer comprises rolling bearings through which the fork (5) is mounted on the frame (3) and rolling bearings through which the cam (21) is mounted on the frame.

10. Gear reducer (1) according to any one of the previous claims, **characterized in that** the fork (5) is made of a metallic material such as titanium or aluminum.

11. Cockpit control device for an aircraft, comprising a gear reducer (1) according to any one of the previous claims and comprising a control stick fixed in rotation around the axis (X5) to the fork (5).

## Patentansprüche

1. Untersetzungsgetriebe (1) für eine Cockpitsteuerungsvorrichtung eines Flugzeugs,
wobei das Untersetzungsgetriebe Folgendes umfasst:
- einen Rahmen (3),
- eine Gabel (5), die in Drehung bezüglich des Rahmens (3) um eine Gabelachse (X5) bewegbar ist, wobei die Gabel zwei Arme (7, 8) umfasst, die sich radial von der Gabelachse (X5) erstrecken, die gemeinsam an der Gabelachse (X5) verbunden sind,
- zwei Walzen (13, 15), wobei die Walzen jeweils an einem Ende (12, 14) der Arme montiert sind, wobei jede Walze in Drehung bezüglich des entsprechenden Arms um eine Walzenachse (X13, X15) parallel zu der Gabelachse bewegbar ist, und
- einen Nocken (21), der in Drehung bezüglich des Rahmens um eine Nockenachse (X21) parallel zu der Gabelachse bewegbar ist, wobei die Walzen jeweils mit entgegengesetzten Seiten (21A, 21B) des Nockens in Wälzkontakt sind, wobei eine der Gabel und des Nockens ein Eingang des Untersetzungsgetriebes ist, wobei der andere ein Ausgang des Untersetzungsgetriebes ist,
**dadurch gekennzeichnet, dass** die Arme (7, 8) elastisch durch den Nocken (21) derart verformt sind, dass die Arme konvergierende Kräfte auf den Nocken durch die Walzen (13, 15) anlegen, um den Nocken zwischen den zwei Walzen zusammenzudrücken.

2. Untersetzungsgetriebe (1) nach Anspruch 1, **dadurch gekennzeichnet, dass** alle mechanischen Elemente des Untersetzungsgetriebes (1) in Wälzkontakt miteinander sind, ohne miteinander in Gleitkontakt zu sein.

3. Untersetzungsgetriebe (1) nach einem der vorstehenden Ansprüche, **dadurch gekennzeichnet, dass** die zwei Arme (7, 8) gebogen sind und gemeinsam eine C-Form bilden, die sich in einer Ebene senkrecht zu der Gabelachse (X5) erstreckt.

4. Untersetzungsgetriebe (1) nach einem der vorstehenden Ansprüche, **dadurch gekennzeichnet, dass**: die Gabel (5) einen Steifigkeitswert zwischen den zwei Walzenachsen (X13, X15) aufweist, der zwischen etwa 2000 N.mm⁻¹ und 4000 N.mm⁻¹ liegt.

5. Untersetzungsgetriebe (1) nach einem der vorstehenden Ansprüche, **dadurch gekennzeichnet, dass** der Nocken (21) mit einer Lageroberfläche (25) versehen ist, die sich auf den entgegengesetzten Seiten (21A, 21B) des Nockens erstreckt, und auf der die Walzen in Wälzkontakt sind.

6. Untersetzungsgetriebe (1) nach Anspruch 5, **dadurch gekennzeichnet, dass** die zwei Arme eine symmetrische Form bezüglich einer Mittenebene, die die Gabelachse (X5) enthält, aufweisen.

7. Untersetzungsgetriebe (1) nach Anspruch 6, **dadurch gekennzeichnet, dass**:
- die Drehbewegung der Gabel (5) zu dem Nocken (21) und umgekehrt mit einem Untersetzungsverhältnis übertragen wird;
- die Lageroberfläche (25) sich parallel zu der Nockenachse (X21) erstreckt und in eine erste Hälfte (23), die als eine erste Herzkurve geformt ist, und eine zweite Hälfte (24), die als eine zweite Herzkurve symmetrisch zu der ersten Herzkurve geformt ist, geteilt ist, wobei die erste und die zweite Hälfte die Nockenachse (X21) umgeben;
- die erste Walze (13) in Wälzkontakt auf der ersten Seite (21A) des Nockens (21) mit der ersten Hälfte (23) der Lageroberfläche (25) ist;
- die zweite Walze (15) in Wälzkontakt mit der zweiten Seite (21B) mit der zweiten Hälfte (24) der Lageroberfläche (25) ist; und
- jede der Herzkurven durch eine Gleichung definiert ist, die die folgenden Parameter, von welchen das Untersetzungsverhältnis abhängt, verknüpft:
- die Form der Lageroberfläche (25) des Nockens (21),
- die Distanz zwischen der Gabelachse (X5) und der Nockenachse (X21),
- die Distanz zwischen der Gabelachse (X5) und der Walzenachse (X13) der ersten Walze (13),
- die Distanz zwischen der Gabelachse (X5) und der Walzenachse (X15) der zweiten Walze (15),
- eine Distanz (D1), die zwischen der Walzenachse (X13) und (X15) definiert ist, und
- der Radius der Walzen (13, 15).

8. Untersetzungsgetriebe (1) nach einem der vorstehenden Ansprüche, **dadurch gekennzeichnet, dass** das Untersetzungsgetriebe Wälzlager umfasst, mittels welchen die Walzen (13, 15) auf die Arme (7, 8) montiert sind.

9. Untersetzungsgetriebe (1) nach einem der vorstehenden Ansprüche, **dadurch gekennzeichnet, dass** das Untersetzungsgetriebe Wälzlager umfasst, durch die die Gabel (5) auf den Rahmen (3) montiert ist, und Wälzlager, durch die der Nocken (21) auf den Rahmen montiert ist.

10. Untersetzungsgetriebe (1) nach einem der vorstehenden Ansprüche, **dadurch gekennzeichnet, dass** die Gabel (5) aus einem metallischen Material, wie Titan oder Aluminium besteht.

11. Cockpitsteuerungsvorrichtung für ein Flugzeug, die ein Untersetzungsgetriebe (1) nach einem der vorstehenden Ansprüche umfasst, und einen Steuerknüppel umfasst, der in Drehung um die Achse (X5) an der Gabel (5) befestigt ist.

## Revendications

1. Réducteur (1) pour un dispositif de commande de poste de pilotage d'un aéronef,
le réducteur comprenant :
- un cadre (3),
- une fourche (5), mobile en rotation par rapport au cadre (3) autour d'un axe de fourche (X5), la fourche comprenant deux bras (7, 8) s'étendant radialement depuis l'axe de fourche (X5), reliés ensemble au niveau de l'axe de fourche (X5),
- deux rouleaux (13, 15), les rouleaux étant montés respectivement au niveau d'une extrémité (12, 14) des bras, chaque rouleau étant mobile en rotation par rapport au bras correspondant autour d'un axe de rouleau (X13, X15) parallèle à l'axe de fourche, et
- une came (21) mobile en rotation par rapport au cadre autour d'un axe de came (X21) parallèle à l'axe de fourche, les rouleaux étant en contact de roulement respectivement avec les côtés opposés (21A, 21B) de la came, l'une parmi la fourche et la came étant une entrée du réducteur, l'autre étant une sortie du réducteur,
**caractérisé en ce que** les bras (7, 8) sont déformés élastiquement par la came (21) de sorte que les bras appliquent des forces convergentes sur la came à travers les rouleaux (13, 15) pour serrer la came entre les deux rouleaux.

2. Réducteur (1) selon la revendication 1, **caractérisé en ce que** tous les éléments mécaniques du réducteur (1) sont en contact de roulement les uns avec les autres, sans être en contact coulissant les uns avec les autres.

3. Réducteur (1) selon l'une quelconque des revendications précédentes, **caractérisé en ce que** les deux bras (7, 8) sont incurvés et prennent ensemble une forme en C s'étendant dans un plan perpendiculaire à l'axe de fourche (X5).

4. Réducteur (1) selon l'une quelconque des revendications précédentes, **caractérisé en ce que** : la fourche (5) a une valeur de rigidité, entre les deux axes de rouleaux (X13, X15), comprise entre environ 2000 N.mm⁻¹ et 4000 N.mm⁻¹.

5. Réducteur (1) selon l'une quelconque des revendications précédentes, **caractérisé en ce que** la came (21) est munie d'une surface d'appui (25) qui s'étend sur les côtés opposés (21A, 21B) de la came et sur laquelle les rouleaux sont en contact de roulement.

6. Réducteur (1) selon la revendication 5, **caractérisé en ce que** les deux bras ont une forme symétrique par rapport à un plan médian contenant l'axe de fourche (X5).

7. Réducteur (1) selon la revendication 6, **caractérisé en ce que** :
- le mouvement de rotation de la fourche (5) est transmis à la came (21), et inversement, avec un rapport de réduction ;
- la surface d'appui (25) s'étend parallèlement à l'axe de came (X21) et est divisée en une première moitié (23) en forme de première courbe cardioïde et une deuxième moitié (24) en forme de deuxième courbe cardioïde symétrique à la première courbe cardioïde, la première moitié et la deuxième moitié entourant l'axe de came (X21) ;
- le premier rouleau (13) est en contact de roulement sur le premier côté (21A) de la came (21) avec la première moitié (23) de la surface d'appui (25) ;
- le deuxième rouleau (15) est en contact de roulement sur le deuxième côté (21B) avec la deuxième moitié (24) de la surface d'appui (25) ; et
- chacune des courbes cardioïdes est définie par une équation reliant les paramètres suivants, dont dépend le rapport de réduction :
∘ la forme de la surface d'appui (25) de la came (21),
∘ la distance entre l'axe de fourche (X5) et l'axe de came (X21),
∘ la distance entre l'axe de fourche (X5) et l'axe de rouleau (X13) du premier rouleau (13),
∘ la distance entre l'axe de fourche (X5) et l'axe de rouleau (X15) du deuxième rouleau (15),
∘ une distance (D1) définie entre les axes de rouleaux (X13) et (X15), et
∘ le rayon des rouleaux (13, 15).

8. Réducteur (1) selon l'une quelconque des revendications précédentes, **caractérisé en ce que** le réducteur comprend des roulements au moyen desquels les rouleaux (13, 15) sont montés sur les bras (7, 8).

9. Réducteur (1) selon l'une quelconque des revendications précédentes, **caractérisé en ce que** le réducteur comprend des roulements par lesquels la fourche (5) est montée sur le cadre (3) et des roulements par lesquels la came (21) est montée sur le cadre.

10. Réducteur (1) selon l'une quelconque des revendications précédentes, **caractérisé en ce que** la fourche (5) est réalisée en un matériau métallique tel que le titane ou l'aluminium.

11. Dispositif de commande de poste de pilotage d'un aéronef, comprenant un réducteur (1) selon l'une quelconque des revendications précédentes et comprenant un manche fixé en rotation autour de l'axe (X5) à la fourche (5).
